# EUROPEAN PATENT SPECIFICATION

(11) **EP 2 811 146 B1**
(45) Date of publication and mention of the grant of the patent: **05.10.2016**
(21) Application number: 13743259.7
(22) Date of filing: 25.01.2013
(51) Int. Cl.: F02M 37/10, B62J 35/00, B62J 37/00

(54) **STRUCTURE FOR ATTACHING FUEL PUMP TO FUEL TANK**
STRUKTUR ZUR BEFESTIGUNG EINER KRAFTSTOFFPUMPE AN EINEM KRAFTSTOFFTANK
STRUCTURE PERMETTANT DE FIXER UNE POMPE À CARBURANT À UN RÉSERVOIR DE CARBURANT

(30) Priority: 03.02.2012 JP 2012022188
(43) Date of publication of application: 10.12.2014
(73) Proprietor: Honda Motor Co., Ltd., Minato-ku Tokyo 107-8556 (JP)
(72) Inventor: HORIUCHI Tetsu, Wako-shi Saitama 351-0193 (JP); UENO Masaki, Wako-shi Saitama 351-0193 (JP); SUZUKI Shosuke, Wako-shi Saitama 351-0193 (JP)
(74) Representative: Beder, Jens
(86) International application number: PCT/JP2013/051553
(87) International publication number: WO 2013/115087

(56) References cited:
- JP-A- 2002 221 113
- JP-A- 2007 168 763
- JP-A- 2009 091 958
- JP-A- 2010 037 963

## Description

### TECHNICAL FIELD

The present invention relates to a structure for attaching a fuel pump to a fuel tank, in which part of a tubular pump housing of a fuel pump is inserted into a fuel tank through a through hole provided in the fuel tank, and the pump housing is provided with a flange part that protrudes outwardly from the pump housing so that sealing means surrounding the through hole is interposed between the flange part and an outer face of the fuel tank, and a plurality of projecting parts that project outwardly from the pump housing on the outer side of the fuel tank, the sealing means and the flange part being sandwiched between the fuel tank and a hold-down plate attached to the fuel tank from the outside.

### BACKGROUND ART

A structure for attaching a fuel pump to a fuel tank in which a pump housing of the fuel pump is provided with a flange part protruding outwardly from the pump housing and a plurality of projecting parts projecting outwardly from the pump housing on the outer side of the fuel tank, and a hold-down plate sandwiching sealing means and the flange part between itself and the fuel tank is secured to a plurality of locations in the peripheral direction of an annular base plate fixed to an outer face of the fuel tank is known from Patent Document 1.

### RELATED ART DOCUMENTS

### PATENT DOCUMENT

Patent Document 1: Japanese Patent Application Laid-open No. 2007-168763

### SUMMARY OF THE INVENTION

### PROBLEMS TO BE SOLVED BY THE INVENTION

In the arrangement disclosed in Patent Document 1 above, the hold-down plate is formed into an annular shape that is endlessly connected along the entire periphery. On the other hand, since the pump housing is provided with a coupler part or a connecting pipe part, which project outwardly from the pump housing on the outer side of the fuel tank, in order to avoid the hold-down plate from interfering with the coupler part or the connecting pipe part when attaching a fuel pump to a fuel tank, an inner peripheral part of the annular hold-down plate disclosed in Patent Document 1 is provided with a plurality of clearance recesses at intervals in the peripheral direction, and if the coupler part or the connecting pipe part increases in size, the clearance recesses must be formed so as to be large in size. It is desirable that the pressing force acting on the flange part from the hold-down plate sandwiching the flange part of the pump housing between itself and the fuel tank is uniform in the peripheral direction, and from such a viewpoint the size of the clearance recesses should be as small as possible, but if the size of the clearance recesses is made as small as possible, it becomes difficult to pass through the hold-down plate to the flange part side beyond the projecting parts such as the coupler part and the connecting pipe part, thus making assembly difficult.

The present invention has been accomplished in light of such circumstances, and it is an object thereof to provide a structure for attaching a fuel pump to a fuel tank that enables a flange part to be pressed toward the fuel tank side with a pressing force that is uniform in the peripheral direction while making assembly of a hold-down plate easy.

### MEANS FOR SOLVING THE PROBLEMS

In order to attain the above object, according to a first aspect of the present invention, there is provided a structure for attaching a fuel pump to a fuel tank, in which part of a tubular pump housing of a fuel pump is inserted into a fuel tank through a through hole provided in the fuel tank, and the pump housing is provided with a flange part that protrudes outwardly from the pump housing so that sealing means surrounding the through hole is interposed between the flange part and an outer face of the fuel tank, and a plurality of projecting parts that project outwardly from the pump housing on the outer side of the fuel tank, the sealing means and the flange part being sandwiched between the fuel tank and a hold-down plate mounted on the fuel tank from the outside, characterized in that the hold-down plate comprises a plurality of plate members that are divided in a peripheral direction of the pump housing, are formed as separate bodies from each other, and have opposite end parts in the peripheral direction superimposed on one another in a direction along an axis of the pump housing.

Further, according to a second aspect of the present invention, in addition to the first aspect, the hold-down plate comprises first and second plate members that are divided in the peripheral direction of the pump housing, are formed as separate bodies from each other, and have opposite end parts in the peripheral direction superimposed on one another, and in a superimposition area where the first and second plate members are superimposed on one another at least one of the first and second plate members has formed a recess that is recessed toward the side opposite to the flange part in a direction along an axial direction of the pump housing in order to make faces, on the flange part side, of the first and second plate members flush.

According to a third aspect of the present invention, in addition to the second aspect, an engagement claw is projectingly provided in an end part in the peripheral direction of at least one of the first and second plate members, which are press formed, the engagement claw extending toward at least the other of the first and second plate members, and a cutout is provided in an end part in the peripheral direction of at least the other of the first and second plate members, the engagement claw engaging with the cutout.

According to a fourth aspect of the present invention, in addition to the third aspect, the first and second plate members are each formed into an arc shape, the recess and the cutout are formed in one end part in the peripheral direction of each of the first and second plate members, the other end parts in the peripheral direction of the first and second plate members are superimposed on the one end part in the peripheral direction of the second plate member and the one end part in the peripheral direction of the first plate member so as to be each housed in the recess, and the engagement claw is projectingly provided on each of the other end parts in the peripheral direction of the first and second plate members.

According to a fifth aspect of the present invention, in addition to the fourth aspect, an erroneous assembly-preventing projecting part is projectingly provided on the one end part in the peripheral direction of the first and second plate members, the erroneous assembly-preventing projecting part projecting in a direction opposite to the other end part in the peripheral direction of the second plate member and the other end part in the peripheral direction of the first plate member in a state in which the first and second plate members are normally assembled to each other.

According to a sixth aspect of the present invention, in addition to any one of the second to fifth aspects, positioning means is provided between one of the first and second plate members and the flange part, the positioning means determining the relative position in the peripheral direction of the hold-down plate relative to the flange part.

According to a seventh aspect of the present invention, in addition to any one of the first to sixth aspects, an annular seal member forming at least part of the sealing means is provided with a tongue portion extending further outwardly than an outer periphery of the flange part, and one of the first and second plate members is provided with a window for checking the tongue portion from the outside.

According to an eighth aspect of the present invention, in addition to the second aspect, a clamper for retaining a fuel hose is mounted on at least one of the first and second plate members.

A first external connecting pipe part 27, a second external connecting pipe part 28, a third external connecting pipe part 29, and a coupler part 30 of an embodiment correspond to the projecting part of the present invention, and an outer seal member 41 of the embodiment corresponds to the seal member of the present invention.

### EFFECTS OF THE INVENTION

In accordance with the first aspect of the present invention, since the hold-down plate mounted on the fuel tank from the outside so as to sandwich the sealing means and the flange part of the pump housing between itself and the fuel tank is formed from a plurality of plate members that are divided in the peripheral direction of the pump housing and are formed as separate bodies from each other, and opposite end parts in the peripheral direction of the plate members are superimposed on one another in a direction along the axis of the pump housing, it becomes unnecessary to provide in the inner periphery side of each plate member a clearance recess for avoiding interference between the hold-down plate and each projecting part, thus enabling assembly of the hold-down plate to be made easy by assembling the plurality of plate members from the side of the pump housing between the flange part of the pump housing and each projecting part to thus form the hold-down plate, and thereby making it possible to press the flange part toward the fuel tank by means of a pressing force that is uniform in the peripheral direction.

Furthermore, in accordance with the second aspect of the present invention, since the opposite end parts in the peripheral direction of the first and second plate members forming the hold-down plate are superimposed on one another so that the recess formed in at least one of the first and second plate members has the other thereof superimposed thereon, it is possible by a simple arrangement to facilitate assembly of the first and second plate members to each other while making the faces of the first and second plate members opposing the flange part flush.

In accordance with the third aspect of the present invention, due to the engagement claw provided on at least one of the first and second plate members being engaged with the cutout provided in at least the other of the first and second plate members, the relative position of the first and second plate members in the peripheral direction can be reliably determined, and since the engagement claw extends, in the end part in the peripheral direction of at least one of the first and second plate members, that is, in the area where the first and second plate members are superimposed, toward the other thereof, it is possible to easily form the engagement claw when press forming the plate member.

In accordance with the fourth aspect of the present invention, since the recess and the cutout are formed in one end part in the peripheral direction of the arc-shaped first and second plate members respectively, and the engagement claws are projectingly provided on the other end parts in the peripheral direction of the first and second plate members superimposed on the one end part in the peripheral direction of the second and first plate members so as to be housed in the recesses, it is possible to easily assemble the annular hold-down plate so that the opposite end parts in the peripheral direction of the two plate members are superimposed on one another while reducing the number of components by making the outer shape of the first and second plate members identical.

In accordance with the fifth aspect of the present invention, since the erroneous assembly-preventing projecting part provided on one end part in the peripheral direction of each of the first and second plate members projects in a direction opposite to the other end part in the peripheral direction of the respective second and first plate members in a state in which the first and second plate members are assembled to each other in a normal state, in an erroneously assembled state the erroneous assembly-preventing projecting parts abut against the other end parts in the peripheral direction of the second and first plate members, and it is thus possible to prevent the occurrence of erroneous assembly when assembling the first and second plate members by superimposing the opposite end parts in the peripheral direction.

In accordance with the sixth aspect of the present invention, due to the positioning means provided between one of the first and second plate members and the flange part, it is possible to reliably determine the relative position of the hold-down plate in the peripheral direction with respect to the flange part.

In accordance with the seventh aspect of the present invention, the tongue portion provided on the seal member so as to extend further outwardly than the flange part is checked through the window provided in one of the first and second plate members, thus enabling the state in which the seal member is interposed between the flange part and the fuel tank to be checked, thereby preventing assembly of the seal member from being forgotten.

Furthermore, in accordance with the eighth aspect of the present invention, the fuel hose is retained by the clamper mounted on at least one of the first and second plate members, thus enabling the fuel hose to be retained by a compact arrangement.

### BRIEF DESCRIPTION OF DRAWINGS

[FIG. 1] FIG. 1 is a side view showing an essential part of a motorcycle with part of a fuel tank cut away. (first embodiment)
[FIG. 2] FIG. 2 is an enlarged view of an essential part of FIG. 1. (first embodiment)
[FIG. 3] FIG. 3 is a view in the direction of arrow 3 in Fig. 2. (first embodiment)
[FIG. 4] FIG. 4 is a view, corresponding to FIG. 3, in a state in which a filter and a fuel hose are removed. (first embodiment)
[FIG. 5] FIG. 5 is a sectional view along line 5-5 in FIG. 4. (first embodiment)
[FIG. 6] FIG. 6 is a view showing sealing means and a base plate when viewed from the direction of arrow 6 in FIG. 5 in a state in which a pump housing is omitted. (first embodiment)
[FIG. 7] FIG. 7 is an exploded view of a hold-down plate from the same direction as in FIG. 3 and FIG. 4.
[FIG. 8] FIG. 8 is a sectional view along line 8-8 in FIG. 4. (first embodiment)

### EXPLANATION OF REFERENCE NUMERALS AND SYMBOLS

- 23: Fuel tank
- 24: Fuel pump
- 25: Pump housing
- 26: Flange part
- 27: First external connecting pipe part, which is a projecting part
- 28: Second external connecting pipe part, which is a projecting part
- 29: Third external connecting pipe part, which is a projecting part
- 30: Coupler part, which is a projecting part
- 36: Through hole
- 39: Hold-down plate
- 40: Sealing means
- 41: Outer seal member, which is a seal member
- 41c: Tongue portion
- 51: First plate member
- 52: Second plate member
- 53: Recess
- 54: Engagement claw
- 55: Cutout
- 56: Erroneous assembly-preventing projecting part
- 58: Positioning means
- 65: Window
- 66, 67: Clamper

### MODE FOR CARRYING OUT THE INVENTION

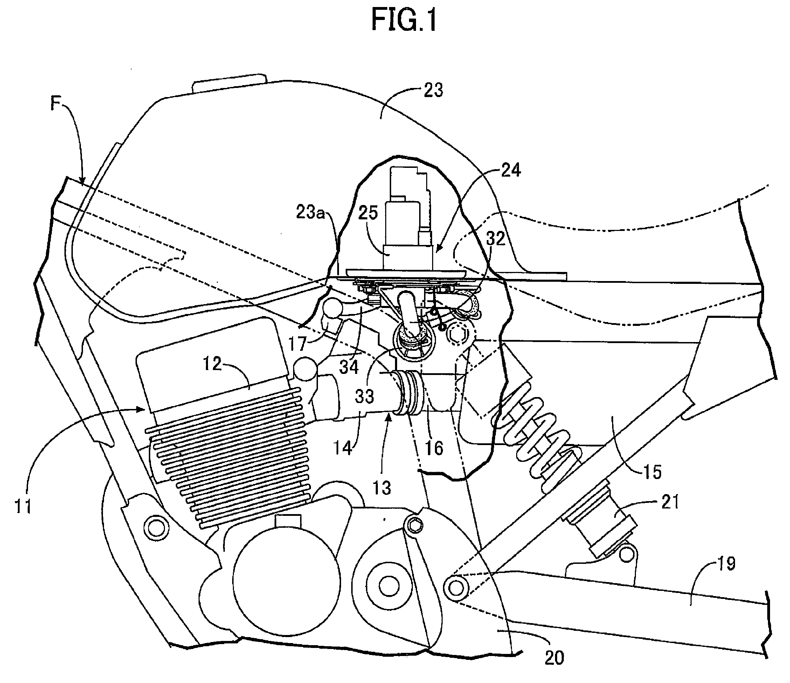

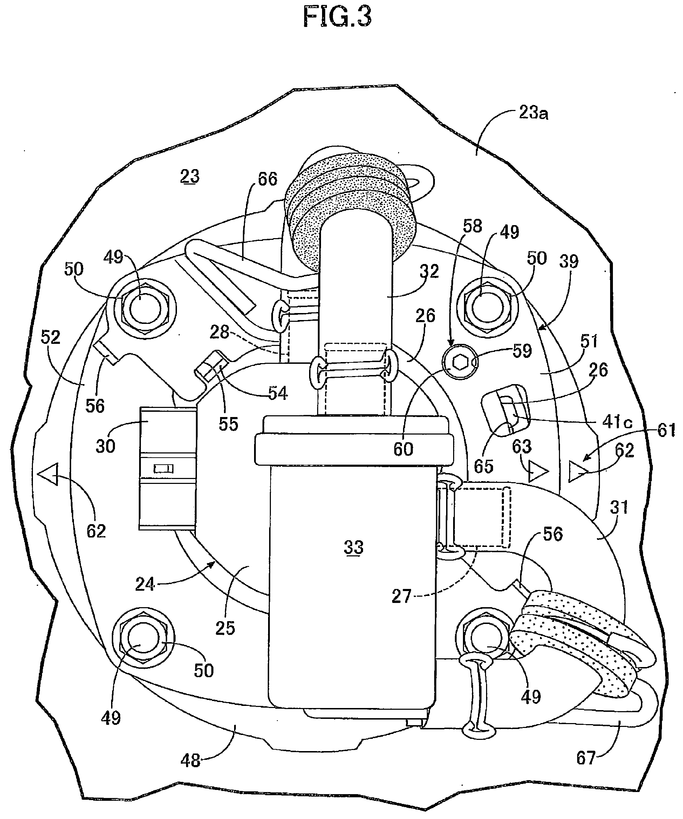

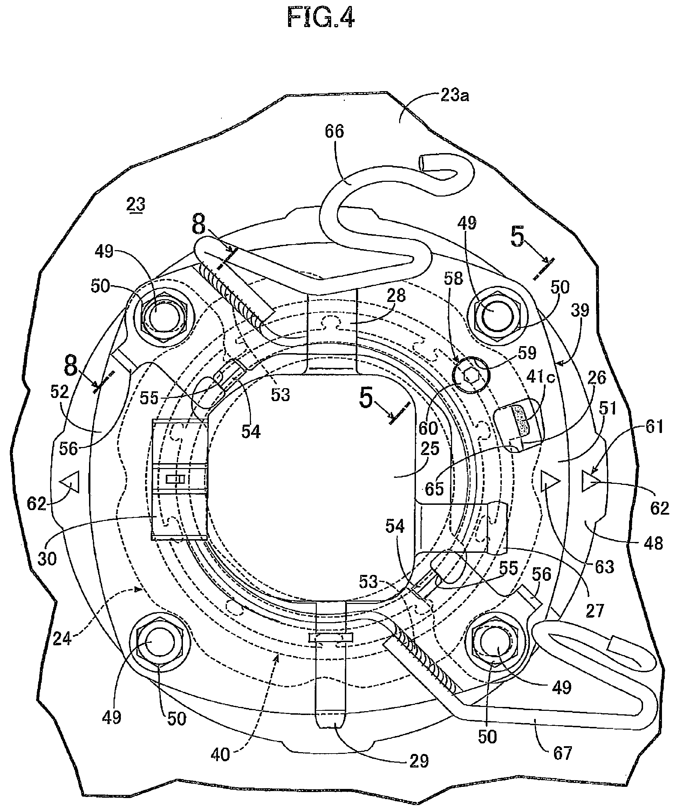

A mode for carrying out the present invention is explained by reference to FIG. 1 to FIG. 8.

### FIRST EMBODIMENT

First, in FIG. 1, an engine main body 11 is mounted on a vehicle body frame F of a motorcycle, an intake device 13 connected to a cylinder head 12 of the engine main body 11 includes a throttle body 14 connected to a rear face of the cylinder head 12, an air cleaner 15 disposed to the rear of the throttle body 14, and a connecting tube 16 linking the throttle body 14 and the air cleaner 15, and the throttle body 14 is equipped with a fuel injection valve 17.

Provided on the vehicle body frame F so as to be positioned to the rear of the engine main body 11 is a pivot plate 20 swingably supporting a front end part of a swing arm 19 axially supporting on its rear end part a rear wheel, which is not illustrated, and provided between the swing arm 19 and the vehicle body frame F is a rear cushion unit 21.

A fuel tank 23 is mounted on the vehicle body frame F so as to be positioned above the engine main body 11, and a fuel pump 24 for supplying fuel within the fuel tank 23 to the fuel injection valve 17 is mounted on a bottom wall 23a of the fuel tank 23. A pump housing 25 of the fuel pump 24 includes a pump mechanism (not illustrated) and is formed into a tubular shape having a long central axis in the vertical direction.

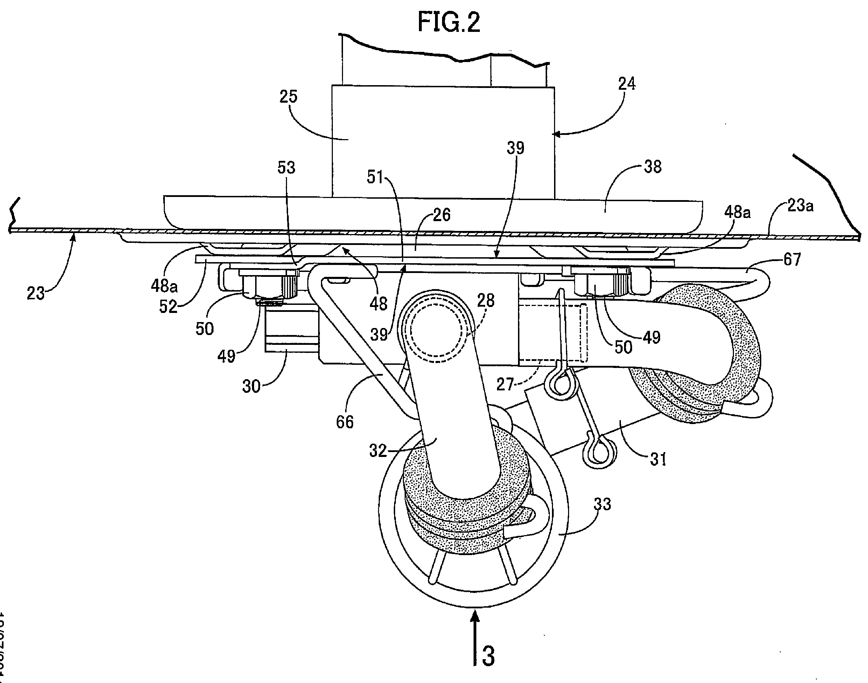

Referring in addition to FIG. 2 to FIG. 4, an upper part of the pump housing 25 is inserted into the fuel tank 23, and a portion of the pump housing 25 projecting further outwardly, that is downwardly, than the bottom wall 23a of the fuel tank 23 is provided with a flange part 26 protruding outwardly from the pump housing 25 and a plurality of projecting parts 27 to 30 projecting outwardly from the pump housing 25, and in this embodiment as the projecting parts a first external connecting pipe part 27, a second external connecting pipe part 28, a third external connecting pipe part 29, and a coupler part 30 project outwardly from a lower face of the pump housing 25.

A fuel storage part (not illustrated) for temporarily storing fuel within the fuel tank 23 is formed within the pump housing 25, and the first external connecting pipe part 27, which communicates with the fuel storage part, is provided in the pump housing 25 so as to project rearwardly. Furthermore, the second external connecting pipe part 28, which communicates with a suction part of the pump mechanism within the pump housing 25, is provided in the pump housing 25 so as to project leftwardly. One end part of a first fuel hose 31 is connected to the first external connecting pipe part 27, the other end part thereof being connected to an inlet of a filter 33 disposed beneath the fuel tank 23, and one end part of a second fuel hose 32 is connected to an outlet of the filter 33, the other end part thereof being connected to the second external connecting pipe part 28. That is, fuel within the fuel tank 23 is sucked into the pump mechanism within the pump housing 25 from the fuel storage part within the pump housing 25 via the first external connecting pipe part 27, the first fuel hose 31, the filter 33, the second fuel hose 32, and the second external connecting pipe part 28.

The third external connecting pipe part 29, which communicates with a discharge part of the pump mechanism, is provided in the pump housing 25 so as to project rightwardly, and a third fuel hose 34 connected to the third external connecting pipe part 29 is connected to the fuel injection valve 17 as shown in FIG. 1.

Furthermore, the coupler part 30 for providing electrical connection to the fuel pump 24 is provided on the pump housing 25 so as to project forwardly.

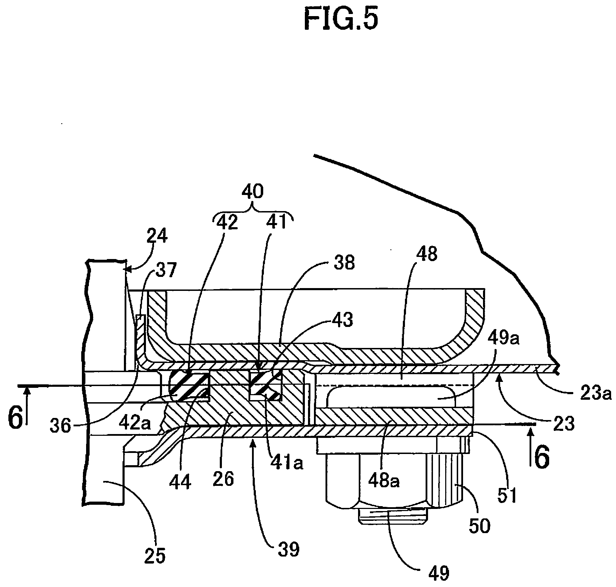

Referring in addition to FIG. 5, a through hole 36 is provided in the bottom wall 23a of the fuel tank 23, the pump housing 25 being inserted through the through hole 36, and a tubular part 37 communicating with the through hole 36 is provided integrally with the bottom wall 23a so as to extend toward the interior of the fuel tank 23. Moreover, a reinforcing ring 38 surrounding the tubular part 37 is secured to an inner face of the bottom wall 23a.

The pump housing 25, which is inserted through the through hole 36 and the tubular part 37, is mounted on the fuel tank 23 by sealing means 40 and the flange part 26 being sandwiched between the bottom wall 23a of the fuel tank 23 and a hold-down plate 39 mounted on the bottom wall 23a of the fuel tank 23 from the outside, that is, from below.

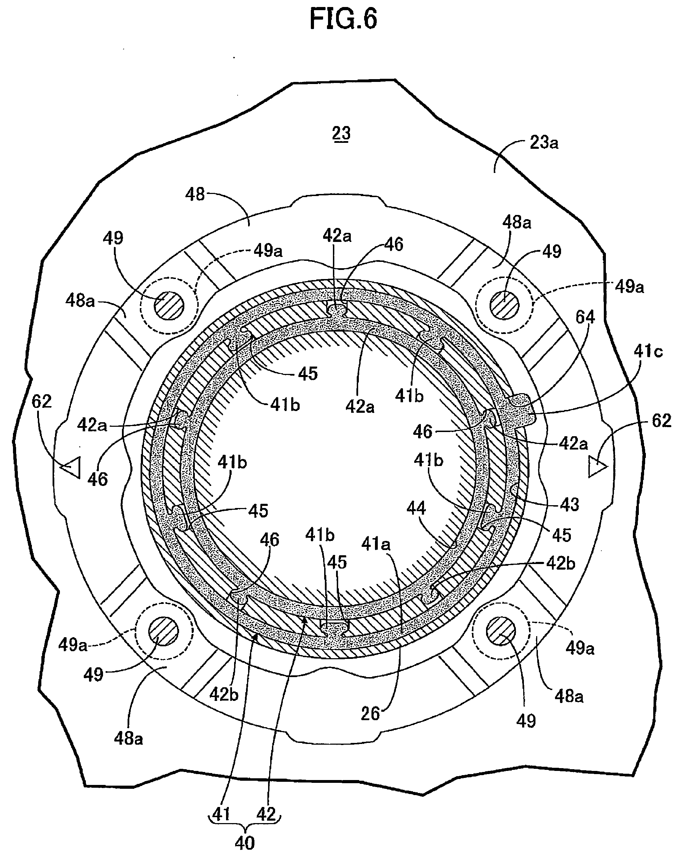

Referring in addition to FIG. 6, the sealing means 40 is formed from an annular outer seal member 41 and an inner seal member 42 coaxially disposed within the outer seal member 41 and surrounding the through hole 36, the outer seal member 41 and the inner seal member 42 being separate bodies from each other and being formed from different materials from each other.

The outer seal member 41 is formed from an annular seal member main portion 41a and a plurality of inner projecting portions 41b projecting radially inwardly from positions equally spaced in the peripheral direction on the inner periphery of the seal member main portion 41a. The inner seal member 42 is formed from an annular seal member main portion 42a and a plurality of outer projecting portions 42b projecting radially outwardly from positions equally spaced in the peripheral direction on the outer periphery of the seal member main portion 42a. The numbers of inner projecting portions 41b and outer projecting portions 42b are set so as to be identical.

On the other hand, a face of the flange part 26 of the pump housing 25 opposing the bottom wall 23a is provided with an outer annular groove 43 for the seal member main portion 41a of the outer seal member 41 to be fitted into, an inner annular groove 44 for the seal member main portion 42a of the inner seal member 42 to be fitted into, a plurality of first positioning grooves 45 extending between the outer annular groove 43 and the inner annular groove 44 for the inner projecting portions 41b of the outer seal member 41 to be fitted thereinto, and a plurality of second positioning grooves 46 provided between the outer annular groove 43 and the inner annular groove 44 for the outer projecting portions 42b of the inner seal member 42 to be fitted thereinto, the first positioning grooves 45 and the second positioning grooves 46 being disposed in turn so as to be equally spaced in the peripheral direction.

By fitting the inner projecting portions 41b into the first positioning grooves 45 the position of the outer seal member 41 in the peripheral direction is determined, and by fitting the outer projecting portions 42b into the second positioning grooves 46 the position of the inner seal member 42 in the peripheral direction is determined.

A base plate 48 formed into a ring shape so as to surround the flange part 26 is secured to an outer face, that is, a lower face of the bottom wall 23a, mounting portions 48a raised into a trapezoidal shape so as to move away from the bottom wall 23a of the fuel tank 23 are provided at four positions equally spaced in the peripheral direction of the base plate 48, and bolts 49 are secured to the mounting portions 48a so as to extend outwardly from the mounting portions 48a, the bolts 49 having enlarged diameter head portions 49a disposed on the bottom wall 23a side.

The hold-down plate 39, which sandwiches the sealing means 40 and the flange part 26 between itself and the bottom wall 23a of the fuel tank 23, is secured to the mounting portions 48a of the base plate 48, the hold-down plate 39 being formed from a plurality of plate members that are divided in the peripheral direction of the pump housing 25, are formed as separate bodies from each other, and have opposite end parts in the peripheral direction superimposed on one another in a direction along the axis of the pump housing 25; in this embodiment, the hold-down plate 39 is formed from first and second plate members 51 and 52 that are divided in the peripheral direction of the pump housing 25, are formed as separate bodies from each other, and have opposite end parts thereof in the peripheral direction superimposed on one another, the first and second plate members 51 and 52 being press formed.

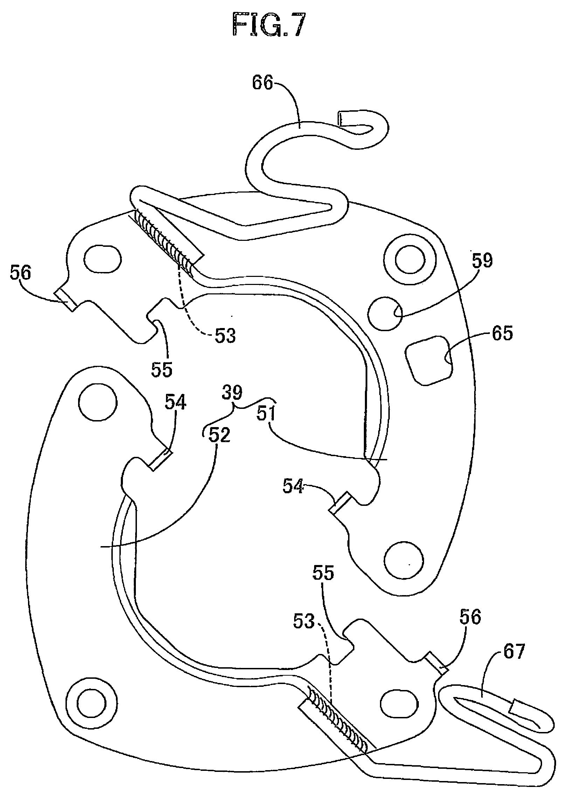

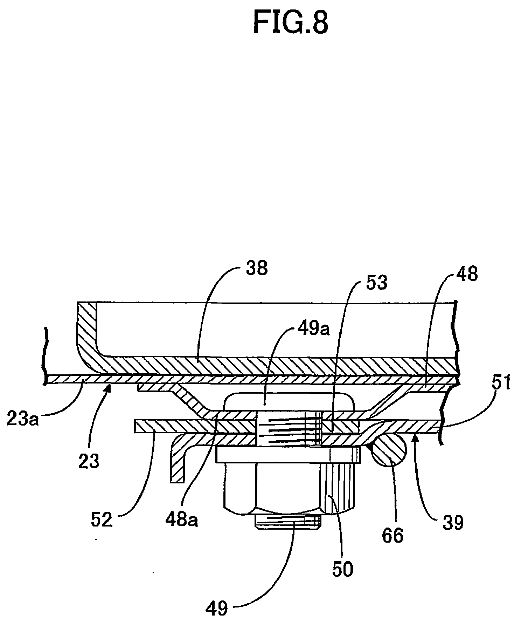

Referring in addition to FIG. 7 and FIG. 8, in a superimposition area where the first and second plate members 51 and 52 are superimposed on one another, a recess 53 is formed in at least one of the first and second plate members 51 and 52 in order to make faces, on the flange part 26 side, of the first and second plate members 51 and 52 flush, the recess 53 being recessed toward the side opposite to the flange part 26 in a direction along the axial direction of the pump housing 25; in this embodiment, both the first and second plate members 51 and 52 are formed into an arc shape, the recesses 53 and 53 are formed in one end part in the peripheral direction of each of the first and second plate members 51 and 52, and the one end part in the peripheral direction of the second plate member 52 and the one end part in the peripheral direction of the first plate member 51 are superimposed on the other end parts in the peripheral direction of the first and second plate members 51 and 52 so as to be housed in the recesses 53 and 53.

Moreover, an engagement claw 54 is projectingly provided on an end part in the peripheral direction of at least one of the first and second plate members 51 and 52, in this embodiment the inner periphery of the other end part in the peripheral direction on the side opposite in the peripheral direction to the side where the recesses 53 and 53 are formed on the first and second plate members 51 and 52, the engagement claw 54 extending toward at least the other of the first and second plate members 51 and 52; in this embodiment the engagement claw 54 that extends toward the one end part in the peripheral direction of the second plate member 52 is projectingly provided on the inner periphery of the other end part in the peripheral direction of the first plate member 51, and the engagement claw 54 that extends toward the one end part in the peripheral direction of the first plate member 51 is projectingly provided on the inner periphery of the other end part in the peripheral direction of the second plate member 52. Furthermore, cutouts 55 and 55 are provided in the one end part in the peripheral direction of each of the first and second plate members 51 and 52, the engagement claws 54 being engaged with the cutouts 55 and 55.

Moreover, erroneous assembly-preventing projecting parts 56 and 56 are projectingly provided on the one end part in the peripheral direction of each of the first and second plate members 51 and 52, the erroneous assembly-preventing projecting parts 56 and 56 projecting in a direction opposite to the other end parts in the peripheral direction of the second plate member 52 and the first plate member 51 in a state in which the first and second plate members 51 and 52 are assembled to each other in a normal state.

The hold-down plate 39 formed from the first and second plate members 51 and 52 is mounted on the bottom wall 23a of the fuel tank 23 by screwing and tightening nuts 50 around the bolts 49 projecting from the mounting portions 48a in a state in which the superimposition areas of the first and second plates 51 and 52 are made to abut against two mounting portions 48a and 48a among the four mounting portions 48a of the base plate 48, and intermediate parts, in the peripheral direction, of the first and second plate members 51 and 52 are made to abut against the remaining two mounting portions 48a and 48a of the base plate 48. Moreover, the amount by which each of the mounting portions 48a is raised from the bottom wall 23a is set so that a pressing force is exhibited that is sufficient for the two plate members 51 and 52 of the hold-down plate 39 to press the flange part 26 against the bottom wall 23a of the fuel tank 23 in a state in which they are secured to each of the mounting portions 48a.

Furthermore, provided between one of the first and second plate members 51 and 52 and the flange part 26 of the pump housing 25 is first positioning means 58 that determines the relative position in the peripheral direction of the hold-down plate 39 with respect to the flange part 26, the first positioning means 58 being formed from a positioning hole 59 provided in the first plate member 51 and a positioning projecting part 60 projectingly provided on the flange part 26 so as to fit into the positioning hole 59.

Moreover, provided between one of the first and second plate members 51 and 52 and the base plate 48 secured to the bottom wall 23a of the fuel tank 23 is second positioning means 61 that determines the relative position in the peripheral direction of the hold-down plate 39 with respect to the base plate 48, the second positioning means 61 being formed from, for example, triangular positioning marks 62 and 62 provided at the front and rear of the base plate 48 and, for example, a triangular positioning mark 63 provided on the first plate member 51 so as to correspond to the positioning marks 62 and 62; since the relative position in the peripheral direction of the hold-down plate 39 with respect to the flange part 26 is determined by the first positioning means 58, determining the relative position in the peripheral direction of the hold-down plate 39 with respect to the base plate 48 by the second positioning means 61 allows the pump housing 25 to be attached to the fuel tank 23 in the correct attitude.

A tongue portion 41c extending radially outwardly from the seal member main portion 41a so as to extend further outwardly than the outer periphery of the flange part 26 is provided on the outer seal member 41 forming at least part of the sealing means 40 so as to be positioned in the vicinity of the positioning projecting part 60. A groove 64 radially outwardly extending from the outer annular groove 43, into which the outer seal member main portion 41a is fitted, to the outer periphery of the flange part 26 of the pump housing 25 is provided in the flange part 26 in order to house the tongue portion 41c. On the other hand, a window 65 for checking the tongue portion 41c from the outside is provided in the first plate member 51, which is one of the first and second plate members 51 and 52, so as to be positioned in the vicinity of the positioning hole 59.

Furthermore, clampers 66 and 67 for retaining the first and second fuel hoses 31 and 32 connected to the filter 33 are mounted on at least one of the first and second plate members 51 and 52, in this embodiment both of the first and second plate members 51 and 52.

The operation of this embodiment is now explained. The pump housing 25 of the fuel pump 24 is provided with the flange part 26, which protrudes outwardly so that the sealing means 40 is interposed between itself and the outer face of the bottom wall 23a of the fuel tank 23, and the first external connecting pipe part 27, second external connecting pipe part 28, third external connecting pipe part 29, and coupler part 30, which project outwardly on the outer side of the fuel tank 23. The sealing means 40 and the flange part 26 are sandwiched between the bottom wall 23a of the fuel tank 23 and the hold-down plate 39, which is mounted on the bottom wall 23a of the fuel tank 23 from the outside. Since the hold-down plate 39 is formed from the plurality of plate members 51 and 52, which are divided in the peripheral direction of the pump housing 25, are formed as separate bodies from each other, and have opposite end parts in the peripheral direction superimposed on one another along the axis of the pump housing 25, it becomes unnecessary to provide in the inner periphery side of each of the plate members 51 and 52 a clearance recess for avoiding interference between the hold-down plate 39 and the first external connecting pipe part 27, second external connecting pipe part 28, third external connecting pipe part 29, and coupler part 30, thus making assembly of the hold-down plate 39 easy by enabling the plurality of plate members 51 and 52 to be assembled from the side of the pump housing 25 between the flange part 26 of the pump housing 25 and the first external connecting pipe part 27, second external connecting pipe part 28, third external connecting pipe part 29, and coupler part 30 to thus form the hold-down plate 39, and thereby making it possible to press the flange part 26 toward the fuel tank 23 by means of a pressing force that is uniform in the peripheral direction.

Furthermore, since the hold-down plate 39 is formed from the first and second plate members 51 and 52, which are divided in the peripheral direction of the pump housing (25), are formed as separate bodies from each other, and have opposite end parts in the peripheral direction superimposed on one another, and the recess 53 is formed in at least one of the first and second plate members 51 and 52 in a superimposition area in which the first and second plate members 51 and 52 are superimposed on one another in order to make the faces of the first and second plate members 51 and 52 opposing the flange part 26 flush, the recess 53 being recessed toward the side opposite to the flange part 26 in a direction along the axial direction of the pump housing 25, it is possible by a simple arrangement to facilitate assembly of the first and second plate members 51 and 52 to each other while making the faces of the first and second plate members 51 and 52 opposing the flange part 26 flush.

Moreover, since the first and second plate members 51 and 52 are press formed, the engagement claw 54 is projectingly provided on the end part in the peripheral direction of at least one of the first and second plate members 51 and 52, the engagement claw 54 extending toward at least the other of the first and second plate members 51 and 52, and the cutout 55 is provided in the end part in the peripheral direction of at least the other of the first and second plate members 51 and 52, the engagement claw 54 engaging with the cutout 55, it is possible to reliably determine the relative position in the peripheral direction of the first and second plate members 51 and 52; since, in the end part in the peripheral direction of at least one of the first and second plate members 51 and 52, that is, the superimposition area of the first and second plate members 51 and 52, the engagement claw 54 extends toward the other thereof, it is possible to easily form the engagement claw 54 when press forming the plate members 51 and 52, on which the engagement claw 54 is provided.

Moreover, since the first and second plate members 51 and 52 are each formed into an arc shape, the recess 53 and the cutout 55 are formed in one end part in the peripheral direction of each of the first and second plate members 51 and 52, the other end parts in the peripheral direction of the first and second plate members 51 and 52 are superimposed on the one end part in the peripheral direction of the second plate member 52 and the one end part in the peripheral direction of the first plate member 51 respectively so as to be housed in the recess 53, and the engagement claws 54 are each projectingly provided on the other end parts in the peripheral direction of the first and second plate members 51 and 52, it is possible to easily assemble the annular hold-down plate 39 so as to superimpose the opposite end parts in the peripheral direction of the two plate members 51 and 52 on one another while reducing the number of components by making the outer shape of the first and second plate members 51 and 52 identical.

Furthermore, since the erroneous assembly-preventing projecting parts 56 are projectingly provided on one end part in the peripheral direction of each of the first and second plate members 51 and 52, the erroneous assembly-preventing projecting parts 56 projecting in a direction opposite to the other end part in the peripheral direction of the second plate member 52 and the other end part in the peripheral direction of the first plate member 51 in a state in which the first and second plate members 51 and 52 are assembled to each other in a normal state, in an erroneously assembled state the erroneous assembly-preventing projecting parts 56 abut against the other end parts in the peripheral direction of the second and first plate members 52 and 51, and it is thus possible to prevent the occurrence of erroneous assembly when assembling the first and second plate members 51 and 52 by superimposing the opposite end parts in the peripheral direction.

Moreover, since the positioning means 58, which determines the relative position of the hold-down plate 39 in the peripheral direction with respect to the flange part 26, is provided between the flange part 26 and one of the first and second plate members 51 and 52 (in this embodiment the first plate member 51), it is possible to reliably determine the relative position of the hold-down plate 39 in the peripheral direction with respect to the flange part 26.

Furthermore, since the tongue portion 41c is provided on the annular outer seal member 41 forming at least part of the sealing means 40, the tongue portion 41c extending further outwardly than the outer periphery of the flange part 26, and the window 65 for checking the tongue portion 41c from the outside is provided in the first plate member 51, which is one of the first and second plate members 51 and 52, it is possible to check the state in which the outer seal member 41 is disposed between the flange part 26 and the fuel tank 23, thus preventing assembly of the outer seal member 41 from being forgotten.

Moreover, since the clampers 66 and 67 for retaining the fuel hoses 31 and 32 are mounted on at least one of the first and second plate members 51 and 52, in this embodiment both of the first and second plate members 51 and 52, it is possible to retain the fuel hoses 31 and 32 with a compact arrangement.

An embodiment of the present invention is explained above, but the present invention is not limited to the embodiment and may be modified in a variety of ways as long as the modifications do not depart from the scope of the claims.

For example, in the embodiment the structure for attaching the fuel pump 24 to the bottom wall 23a of the fuel tank 23 is explained, but other than the bottom wall 23a the present invention may be applied to a structure for attaching a fuel pump to a ceiling wall or a side wall.

## Claims

1. A structure for attaching a fuel pump to a fuel tank, in which part of a tubular pump housing (25) of a fuel pump (24) is inserted into a fuel tank (23) through a through hole (36) provided in the fuel tank (23), and the pump housing (25) is provided with a flange part (26) that protrudes outwardly from the pump housing (25) so that sealing means (40) surrounding the through hole (36) is interposed between the flange part (26) and an outer face of the fuel tank (23), and a plurality of projecting parts (27, 28, 29, 30) that project outwardly from the pump housing (25) on the outer side of the fuel tank (23), the sealing means (40) and the flange part (26) being sandwiched between the fuel tank (23) and a hold-down plate (39) mounted on the fuel tank (23) from the outside, **characterized in that** the hold-down plate (39) comprises a plurality of plate members (51, 52) that are divided in a peripheral direction of the pump housing (25), are formed as separate bodies from each other, and have opposite end parts in the peripheral direction superimposed on one another in a direction along an axis of the pump housing (25).

2. The structure for attaching a fuel pump to a fuel tank according to Claim 1,
wherein the hold-down plate (39) comprises first and second plate members (51, 52) that are divided in the peripheral direction of the pump housing (25), are formed as separate bodies from each other, and have opposite end parts in the peripheral direction superimposed on one another, and in a superimposition area where the first and second plate members (51, 52) are superimposed on one another at least one of the first and second plate members (51, 52) has formed a recess (53) that is recessed toward the side opposite to the flange part (26) in a direction along an axial direction of the pump housing (25) in order to make faces, on the flange part (26) side, of the first and second plate members (51, 52) flush.

3. The structure for attaching a fuel pump to a fuel tank according to Claim 2,
wherein an engagement claw (54) is projectingly provided in an end part in the peripheral direction of at least one of the first and second plate members (51, 52), which are press formed, the engagement claw (54) extending toward at least the other of the first and second plate members (51, 52), and a cutout (55) is provided in an end part in the peripheral direction of at least said other of the first and second plate members (51, 52), the engagement claw (54) engaging with the cutout (55).

4. The structure for attaching a fuel pump to a fuel tank according to Claim 3,
wherein the first and second plate members (51, 52) are each formed into an arc shape, the recess (53) and the cutout (55) are formed in one end part in the peripheral direction of each of the first and second plate members (51, 52), the other end parts in the peripheral direction of the first and second plate members (51, 52) are superimposed on said one end part in the peripheral direction of the second plate member (52) and said one end part in the peripheral direction of the first plate member (51) so as to be each housed in the recess (53), and the engagement claw (54) is projectingly provided on each of the other end parts in the peripheral direction of the first and second plate members (51, 52).

5. The structure for attaching a fuel pump to a fuel tank according to Claim 4,
wherein an erroneous assembly-preventing projecting part (56) is projectingly provided on said one end part in the peripheral direction of the first and second plate members (51, 52), the erroneous assembly-preventing projecting part (56) projecting in a direction opposite to the other end part in the peripheral direction of the second plate member (52) and the other end part in the peripheral direction of the first plate member (51) in a state in which the first and second plate members (51, 52) are normally assembled to each other.

6. The structure for attaching a fuel pump to a fuel tank according to any one of Claims 2 to 5, wherein positioning means (58) is provided between one of the first and second plate members (51, 52) and the flange part (26), the positioning means (58) determining the relative position in the peripheral direction of the hold-down plate (39) relative to the flange part (26).

7. The structure for attaching a fuel pump to a fuel tank according to any one of Claims 1 to 6, wherein an annular seal member (41) forming at least part of the sealing means (40) is provided with a tongue portion (41c) extending further outwardly than an outer periphery of the flange part (26), and one of the first and second plate members (51, 52) is provided with a window (65) for checking the tongue portion (41c) from the outside.

8. The structure for attaching a fuel pump to a fuel tank according to Claim 2,
wherein a clamper (66, 67) for retaining a fuel hose (31, 32) is mounted on at least one of the first and second plate members (51, 52).

## Patentansprüche

1. Konstruktion zum Befestigen einer Kraftstoffpumpe an einem Kraftstofftank, bei der ein Teil eines rohrförmigen Pumpengehäuses (25) der Kraftstoffpumpe in einen Kraftstofftank durch ein Durchgangsloch (36) eingesetzt ist, das in dem Kraftstofftank vorgesehen ist, und bei der das Pumpengehäuse (25) mit einem Flanschteil (26), das nach außen von dem Pumpengehäuse (25) vorsteht, sodass Dichtmittel (40), die das Durchgangsloch (36) umgeben, zwischen dem Flanschteil (26) und einer äußeren Fläche des Kraftstofftanks eingefügt sind, und eine Mehrzahl von vorstehenden Teilen (27, 28, 29, 30) versehen ist, die an der äußeren Seite des Kraftstofftanks (23) von dem Pumpengehäuse (25) vorstehen, wobei die Dichtmittel (40) und der Flanschteil (26) zwischen dem Kraftstofftank (23) und einer Niederhalteplatte (39), die an dem Kraftstofftank (23) von der Außenseite montiert ist, eingeschlossen sind, **dadurch gekennzeichnet, dass** die Niederhalteplatte (39) eine Mehrzahl von Plattenelementen (51, 52) aufweist, die in einer Umfangsrichtung des Pumpengehäuses (25) geteilt als separate Körper voneinander gebildet sind und gegenüberliegende Endbereiche in der Umfangsrichtung haben, die in einer Richtung entlang einer Achse des Pumpengehäuses (25) einander überlagert sind.

2. Konstruktion zum Befestigen einer Kraftstoffpumpe in einem Kraftstofftank gemäß Anspruch 1, wobei die Niederhalteplatte (39) ein erstes und ein zweites Plattenelement (51, 52) aufweist, die in der Umfangsrichtung des Pumpengehäuses (25) geteilt sind und die als separate Körper voneinander gebildet sind und gegenüberliegende Endteile in der Umfangsrichtung haben, die einander gegenüberliegend sind und in einem Überlagerungsbereich, wo das erste und das zweite Plattenelement (51, 52) einander überlagert sind, wenigstens das erste oder das zweite Plattenelement (51, 52) eine Ausnehmung gebildet hat, die auf die Seite dem Flanschteil in einer Richtung entlang der axialen Richtung des Pumpengehäuses (25) gegenüberliegend hin ausgenommen ist, um an der Flanschteil-Seite Flächen des ersten und des zweiten Plattenelements (51, 52) eben zu machen.

3. Konstruktion zum Befestigen einer Kraftstoffpumpe an einem Kraftstofftank gemäß Anspruch 2, wobei eine Eingriffsklaue (54) in einem Endbereich in der Umfangsrichtung wenigstens des ersten oder des zweiten Plattenelements (51, 52) hervorstehend vorgesehen ist, die durch Pressen gebildet wird, wobei die Eingriffsklaue (54) sich auf wenigstens das andere von dem ersten und zweiten Plattenelement (51, 52) zu erstreckt und ein Ausschnitt (55) in einem Endbereich in der Umfangsrichtung von diesem wenigstens einen anderen ersten oder zweiten Plattenelement (51, 52) vorgesehen ist, wobei die Eingriffsklaue (54) in den Ausschnitt (55) eingreift.

4. Konstruktion zum Befestigen einer Kraftstoffpumpe an einem Kraftstofftank gemäß Anspruch 3, wobei das erste und das zweite Plattenelement (51, 52) in einer Bogenform gebildet sind, die Ausnehmung (53) und der Ausschnitt (55) in einem Endbereich in der Umfangsrichtung jedes des ersten und des zweiten Plattenelements (51, 52) gebildet sind, die anderen Endbereiche in der Umfangsrichtung des ersten und des zweiten Plattenelements (51, 52) an dem einen Endbereich in der Umfangsrichtung des zweiten Plattenelements (52) überlagert sind und der eine Endbereich in der Umfangsrichtung des ersten Plattenelements (51), so dass beide in der Ausnehmung (53) aufgenommen werden und die Eingriffsklaue (54) an jedem anderen Endbereich in der Umfangsrichtung des ersten und des zweiten Plattenelements (51, 52) vorstehend vorgesehen ist.

5. Konstruktion zum Befestigen einer Kraftstoffpumpe an einem Kraftstofftank gemäß Anspruch 4, wobei ein eine fehlerhafte Montage verhinderndes vorstehendes Teil (56) an einem Endbereich in der Umfangsrichtung des ersten und des zweiten Plattenelements (51, 52) vorstehend vorgesehen ist, wobei das eine fehlerhafte Montage verhindernde vorstehende Teil (56) in eine Richtung entgegen dem anderen Endbereich in der Umfangsrichtung des zweiten Plattenelements (52) wegweisende Richtung und dem anderen Endbereich in der Umfangsrichtung des ersten Plattenelements (51) vorsteht, in einem Zustand, in dem das erste und das zweite Plattenelement (51, 52) normalerweise miteinander zusammengebaut werden.

6. Konstruktion zum Befestigen einer Kraftstoffpumpe an einem Kraftstofftank gemäß einem der Ansprüche 2 bis 5, wobei ein Positioniermittel (58) zwischen dem ersten oder dem zweiten Plattenelement (51, 52) und dem Flanschteil (26) vorgesehen ist, wobei das Positioniermittel (58) die relative Position in der Umfangsrichtung der Niederhalteplatte (39) relative zu dem Flanschteil (26) bestimmt.

7. Konstruktion zum Befestigen einer Kraftstoffpumpe an einem Kraftstofftank gemäß einem der Ansprüche 1 bis 6, wobei ein ringförmiges Dichtelement (41), das wenigstens einen Teil des Dichtmittels (40) bildet, mit einem Zungenabschnitt (41c) versehen ist, der sich weiter nach außen als ein äußerer Umfang des Flanschteils (26) erstreckt, und das erste oder das zweite Plattenelement (51, 52) mit einem Fenster (65) zum Überprüfen des Zungenbereichs (41c) von der Außenseite versehen ist.

8. Konstruktion zum Befestigen einer Kraftstoffpumpe an einem Kraftstofftank gemäß Anspruch 2, wobei eine Schelle (66, 67) zum Halten eines Kraftstoffschlauchs (31, 32) an wenigstens dem ersten oder dem zweiten Plattenelement (51, 52) montiert ist.

## Revendications

1. Structure pour fixer une pompe à carburant à un réservoir de carburant, dans laquelle une partie d'un boîtier de pompe tubulaire (25) d'une pompe à carburant (24) est insérée dans un réservoir de carburant (23) par un trou débouchant (36) prévu dans le réservoir de carburant (23), et le boîtier de pompe (25) est prévu avec une partie de bride (26) qui fait saillie vers l'extérieur à partir du boîtier de pompe (25) de sorte qu'un moyen d'étanchéité (40) entourant le trou débouchant (36) est intercalé entre la partie de bride (26) et une face externe du réservoir de carburant (23) et une pluralité de parties en saillie (27, 28, 29, 30) qui font saillie vers l'extérieur à partir du boîtier de pompe (25) sur le côté externe du réservoir de carburant (23), le moyen d'étanchéité (40) et la partie de bride (26) étant mis en sandwich entre le réservoir de carburant (23) et une plaque de support (39) montée sur le réservoir de carburant (23) depuis l'extérieur, **caractérisée en ce que** la plaque de support (39) comprend une pluralité d'éléments de plaque (51, 52) qui sont divisés dans une direction périphérique du boîtier de pompe (25), sont formés comme des corps séparés les uns des autres et ont des parties d'extrémité opposées dans la direction périphérique superposées les unes sur les autres dans une direction le long d'un axe du boîtier de pompe (25).

2. Structure pour fixer une pompe à carburant sur un réservoir de carburant selon la revendication 1, dans laquelle la plaque de support (39) comprend des premier et second éléments de plaque (51, 52) qui sont divisés dans la direction périphérique du boîtier de pompe (25), sont formés comme des corps séparés l'un de l'autre, et ont des parties d'extrémité dans la direction périphérique superposées les unes sur les autres, et dans une zone de superposition où les premier et second éléments de plaque (51, 52) sont superposés l'un sur l'autre, au moins l'un des premier et second éléments de plaque (51, 52) forme un évidement (53) qui est enfoncé vers le côté opposé à la partie de bride (26) dans une direction le long d'une direction axiale du boîtier de pompe (25) afin de permettre aux faces, sur le côté de la partie de bride (26), des premier et second éléments de plaque (51, 52) d'être de niveau.

3. Structure pour fixer une pompe à carburant sur un réservoir de carburant selon la revendication 2, dans laquelle une griffe de mise en prise (54) est prévue en saillie dans une partie d'extrémité dans la direction périphérique d'au moins l'un des premier et second éléments de plaque (51, 52) qui sont formés à la presse, la griffe de mise en prise (54) s'étendant vers au moins l'autre parmi les premier et second éléments de plaque (51, 52) et une découpe (55) est prévue dans une partie d'extrémité dans la direction périphérique d'au moins ledit autre des premier et second éléments de plaque (51, 52), la griffe de mise en prise (54) se mettant en prise avec la découpe (55).

4. Structure pour fixer une pompe à carburant sur un réservoir de carburant selon la revendication 3, dans laquelle les premier et second éléments de plaque (51, 52) sont chacun formés en forme d'arc, l'évidement (53) et la découpe (55) sont formés dans une partie d'extrémité dans la direction périphérique de chacun des premier et second éléments de plaque (51, 52), les autres parties d'extrémité dans la direction périphérique des premier et second éléments de plaque (51,52) sont superposées sur ladite une partie d'extrémité dans la direction périphérique du second élément de plaque (52) et ladite une partie d'extrémité dans la direction périphérique du premier élément de plaque (51) afin que chacune soit logée dans l'évidement (53) et la griffe de mise en prise (54) est prévue en saillie sur chacune des autres parties d'extrémité dans la direction périphérique des premier et second éléments de plaque (51, 52).

5. Structure pour fixer une pompe à carburant sur un réservoir de carburant selon la revendication 4, dans laquelle une partie en saillie de prévention d'assemblage erroné (56) est prévue en saillie sur ladite une partie d'extrémité dans la direction périphérique des premier et second éléments de plaque (51, 52), la partie en saillie de prévention d'assemblage erroné (56) faisant saillie dans une direction opposée à l'autre partie d'extrémité dans la direction périphérique du second élément de plaque (52) et l'autre partie d'extrémité dans la direction périphérique du premier élément de plaque (51) dans un état dans lequel les premier et second éléments de plaque (51, 52) sont normalement assemblés entre eux.

6. Structure pour fixer une pompe à carburant sur un réservoir de carburant selon l'une quelconque des revendications 2 à 5, dans laquelle le moyen de positionnement (58) est prévu entre l'un des premier et second éléments de plaque (51, 52) et la partie de bride (26), le moyen de positionnement (58) déterminant la position relative dans la direction périphérique de la plaque de support (39) par rapport à la partie de bride (26).

7. Structure pour fixer une pompe à carburant sur un réservoir de carburant selon l'une quelconque des revendications 1 à 6, dans laquelle un élément de joint d'étanchéité annulaire (41) formant au moins une partie du moyen d'étanchéité (40) est prévu avec une partie de languette (41c) s'étendant davantage vers l'extérieur qu'une périphérie externe de la partie de bride (26), et l'un des premier et second éléments de plaque (51, 52) est prévu avec une fenêtre (65) pour vérifier la partie de languette (41c) depuis l'extérieur.

8. Structure pour fixer une pompe à carburant sur un réservoir de carburant selon la revendication 2, dans laquelle un attache-fils (66, 67) pour retenir un tuyau flexible de carburant (31, 32) est monté sur au moins l'un des premier et second éléments de plaque (51, 52).
